Europäisches Patentamt

European Patent Office

Office européen des brevets

(19)

(11) Numéro de publication: **0 323 364**
**A1**

## DEMANDE DE BREVET EUROPEEN

(21) Numéro de dépôt: 88403376.2

(22) Date de dépôt: 30.12.88

(51) Int. Cl.⁴: **A 01 G 23/08**

(30) Priorité: 31.12.87 FR 8718480

(43) Date de publication de la demande:
05.07.89 Bulletin 89/27

(84) Etats contractants désignés:
AT BE DE ES GB SE

(71) Demandeur: **ASSOCIATION POUR LA RATIONALISATION ET LA MECANISATION DE L'EXPLOITATION FORESTIERE A.R.M.E.F. 164, Boulevard Haussmann F-75008 Paris (FR)**

(72) Inventeur: **Pomies, Jean-Pierre La Grand Maison Paucourt F-45200 Montargis (FR)**

(74) Mandataire: **Nony, Michel et al Cabinet NONY & CIE 29, rue Cambacérès F-75008 Paris (FR)**

(54) Tête de travail pour machine de façonnage d'arbres.

(57) L'invention est relative à une tête de travail pour machine de façonnage d'arbres, comprenant des moyens d'entraînement (4) et au moins un ensemble de façonnage comportant au moins un couteau mobile (6,6',7,7') et un vérin d'actionnement (8,9) pour appliquer ledit couteau contre la surface d'un arbre.

Elle comprend des moyens (14) pour annuler la pression dans lesdits vérins pendant la phase de démarrage desdits moyens d'entraînement.

Fig. 3

Bundesdruckerei Berlin

EP 0 323 364 A1

**Description**

## Tete de travail pour machine de façonnage d'arbres.

La présente invention concerne une tête de travail pour une machine de façonnage d'arbres, et plus particulièrement une telle tête de travail comprenant des moyens d'entraînement et au moins un ensemble de façonnage, comportant au moins un couteau mobile et un vérin d'actionnement pour appliquer ledit couteau contre la surface d'un arbre.

On connait déjà de telles têtes, qui peuvent généralement également servir à l'abattage des arbres, et dans lesquelles les moyens d'entraînement sont constitués de deux rouleaux qui sont disposés de part et d'autre du tronc de l'arbre. Des vérins permettent de presser les rouleaux contre le tronc de sorte que, lorsque les rouleaux sont mis en rotation, ils entraînent l'arbre dans un mouvement longitudinal.

Au cours de ce mouvement, les couteaux qui sont eux-mêmes pressés contre le tronc par leur vérin d'actionnement provoquent l'ébranchage tout en assurant le guidage de l'arbre à façonner.

Bien que fonctionnant correctement ces appareils présentent l'inconvénient de nécessiter de grandes dépenses d'énergie hydraulique, notamment dans les phases de démarrage et d'accélération de l'arbre à façonner.

La présente invention vise à remédier à cet inconvénient en fournissant une tête de façonnage dont la consommation énergétique est réduite par rapport à celle des têtes conventionnelles.

A cet effet, l'invention a pour objet une tête de travail pour machine de façonnage d'arbres comprenant des moyens d'entraînement et au moins un ensemble de façonnage, chacun disposé d'un des côtés des rouleaux d'entraînement et comportant au moins un couteau mobile et un vérin d'actionnement pour appliquer ledit couteau contre la surface d'un arbre, caractérisée en ce qu'elle comprend des moyens pour annuler la pression dans lesdits vérins pendant la phase de démarrage desdits moyens d'entraînement.

Un tel agencement permet d'annuler pratiquement les frottements des couteaux sur le tronc de l'arbre au moment du démarrage des moyens d'entraînement, c'est-à-dire à l'instant où les efforts d'inertie sont les plus importants puisqu'il s'agit de mettre en mouvement l'arbre à façonner.

La durée pendant laquelle cette pression est annulée peut être réglée à l'aide d'une temporisation à une valeur suffisamment faible, étant donné que les couteaux doivent assurer le guidage du tronc presque instantanément après le démarrage des moyens d'entraînement.

Dans un mode de réalisation particulier comprenant deux ensembles de façonnage disposés de part et d'autre des moyens d'entraînement, chacun des ensembles de façonnage possédant des couteaux mobiles et des couteaux fixes, la tête de travail selon l'invention comprend des moyens pour bloquer le fluide hydraulique dans le vérin de l'ensemble de façonnage amont par rapport au sens de défilement de l'arbre en cours de façonnage, pendant la phase d'accélération desdits moyens d'entraînement.

En effet, lorsque la tête de façonnage est en position d'ébranchage, les couteaux mobiles sont disposés sous le tronc de l'arbre et l'appliquent contre les couteaux fixes disposés au-dessus du tronc. Pendant la phase d'accélération, il se produit un couple qui tend à ouvrir les couteaux mobiles de l'ensemble de façonnage amont.

Pour limiter les efforts nécessaires à la compensation du frottement des couteaux, on est amené à limiter la pression dans les vérins à une valeur relativement faible qui ne serait pas suffisante pour empêcher leur ouverture au cours de cette phase. On évite cet inconvénient en bloquant le fluide hydraulique, par exemple à l'aide d'un clapet piloté.

Lorsque les rouleaux d'entraînement fonctionnent dans un sens tel que le diamètre du tronc augmente au fur et à mesure de son avancement dans la tête de façonnage, on évite une pression trop importante dans les vérins d'actionnement des couteaux, en prévoyant des moyens pour limiter la valeur de la pression dans ces vérins, par example une soupape disposée entre le vérin et le clapet précité.

On décrira maintenant à titre d'exemple non limitatif un mode de réalisation particulier de l'invention en référence aux dessins schématiques annexés dans lesquels :

- la figure 1 est une vue de côté très simplifiée d'une tête de façonnage selon l'invention,
- la figure 2 est une vue en coupe selon la ligne II-II de la figure 1, et
- la figure 3 est un schéma hydraulique de l'ensemble de façonnage de cette tête de travail.

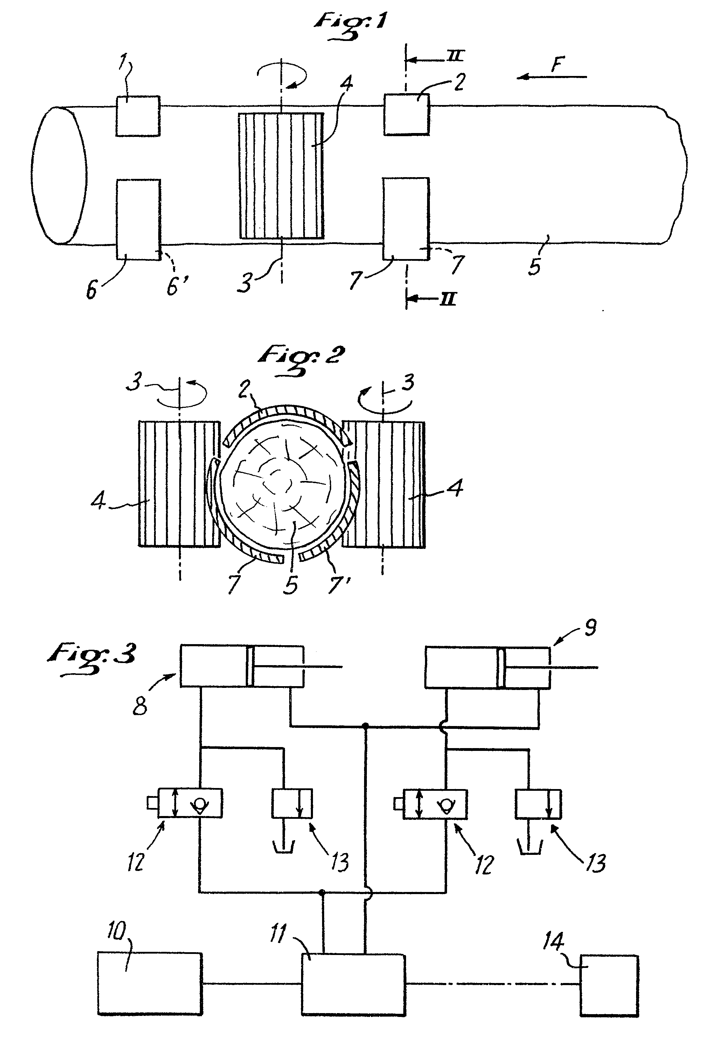

La tête de travail représentée au dessin comporte un bâti, non représenté, sur lequel sont montés fixes deux couteaux supérieurs 1 et 2, ainsi que les axes 3 de deux rouleaux d'entraînement 4. Les axes 3 sont parallèles entre eux et perpendiculaires à la direction longitudinale de l'arbre à façonner. Des vérins permettent de presser les deux rouleaux 4 en direction l'un de l'autre de manière à enserrer un tronc d'arbre 5. Des moteurs hydrauliques permettent de mettre en rotation les rouleaux 4 de manière à entraîner l'arbre 5 dans le sens de la flèche F, ou dans le sens inverse.

Chaque ensemble de façonnage disposé de part et d'autre des rouleaux d'entraînement 4 comporte, outre son couteau fixe, deux couteaux mobiles 6 et 6' pour l'un des ensembles de façonnage, et deux couteaux 7 et 7' pour l'autre ensemble.

Un vérin 8 permet l'ouverture des couteaux 6 et 6' pour permettre l'engagement du tronc 5 dans la tête de façonnage, et leur fermeture pour les appliquer contre ce tronc.

De même un vérin 9 permet l'ouverture et la fermeture des couteaux 7 et 7'.

Les vérins 8 et 9 sont alimentés à partir d'une pompe 10 par l'intermédiaire d'un distributeur 11.

Les grandes chambres des vérins 8 et 9 sont alimentées par l'intermédiaire de clapets 12 commandés électriquement. Par ailleurs des soupapes 13 sont disposées entre ces clapets et les vérins.

Une temporisation 14 reliée à la commande des moteurs d'entraînement des rouleaux 4 agit sur le distributeur 11 pour annuler la pression dans les vérins 8 et 9 pendant la phase de démarrage de ces moteurs, supprimant ainsi le frottement et permettant d'atteindre la phase d'accélération. Cette phase de démarrage peut par exemple durer de l'ordre d'une demi seconde.

Pendant l'ébranchage, la pression d'alimentation des vérins est par example limitée à 60 bars.

Pendant la phase d'accélération dans le sens de la flèche F, les couteaux 7 et 7' sont soumis à un effort vertical tendant à les ouvrir. La pression de 60 bars précitée n'étant pas suffisante pour maintenir les couteaux fermés, le clapet 12 correspondant aux vérins des couteaux 7, bloque le fluide hydraulique contenu dans le vérin et empêche l'ouverture des couteaux.

Pendant une phase d'accélération en sens inverse, il en est de même des couteaux 6 et 6'.

Pendant le fonctionnement à vitesse constante, la pression de 60 bars dans les deux vérins 8 et 9 permet de maintenir le contact de l'arbre sur les couteaux.

Lorsque le sens d'avancement de l'arbre est tel que le diamètre du tronc croît au fur et à mesure de son défilement, la pression dans les vérins est limitée par les deux soupapes 13.

Diverses variantes et modifications peuvent bien entendu être apportées à la description qui précède sans sortir pour autant du cadre ni de l'esprit de l'invention.

C'est ainsi que la temporisation peut être remplacée par la détection du démarrage effectif des dispositifs d'entraînement.

De même, les rouleaux décrits peuvent être remplacés par des rouleaux à axe inclinés ou par des bandes sans fin.

**Revendications**

1. Tête de travail pour machine de façonnage d'arbres, comprenant des moyens d'entraînement (4) et au moins un ensemble (1,2,6,7) de façonnage comportant au moins un couteau mobile (6,7) et un vérin d'actionnement (8,9) pour appliquer ledit couteau contre la surface d'un arbre, caractérisée en ce qu'elle comprend des moyens (14) pour annuler la pression dans lesdits vérins pendant la phase de démarrage desdits moyens d'entraînement.

2. Tête de travail selon la revendication 1, caractérisée en ce que lesdits moyens d'entraînement comprennent deux rouleaux d'entraînement.

3. Tête de travail selon l'une quelconque des revendications 1 et 2, caractérisée en ce qu'elle comprend deux ensembles de façonnage disposés de part et d'autre des moyens d'entraînement et des moyens (12) pour bloquer le fluide hydraulique dans le vérin de l'ensemble de façonnage amont par rapport au sens de défilement de l'arbre en cours de façonnage, pendant la phase d'accélération desdits moyens d'entraînement.

4. Tête de travail selon la revendication 3, caractérisée par le fait que lesdits moyens pour bloquer le fluide hydraulique comprennent un clapet piloté.

5. Tête de travail selon l'une quelconque des revendications 1 à 3, caractérisée par le fait qu'elle comprend des moyens (13) pour limiter la valeur de la pression dans lesdits vérins lors d'une augmentation du diamètre de l'arbre en cours de façonnage.

Fig:1

Fig:2

Fig:3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 938 566 (PENFOLD) <br> * Colonne 9, lignes 36-47 * <br> --- | 1,2 | A 01 G 23/08 |
| A | CA-A- 910 770 (PAYEUR) <br> * Page 2, lignes 12-15; page 6, lignes 6-15; page 8, lignes 10-14; page 10, lignes 13-21 * <br> --- | 3-5 | |
| A | US-A-3 690 351 (STRICKLAND) <br> --- | | |
| A | DE-A-3 112 573 (VEB) <br> --- | | |
| A | US-A-3 596 690 (HAMILTON) <br> --- | | |
| A | US-A-4 039 010 (TUCEK) <br> --- | | |
| A | US-A-4 440 236 (SHIIHARA) <br> ----- | | |

DOMAINES TECHNIQUES RECHERCHES (Int. Cl.4)

A 01 G
B 27 L
F 15 B

Le présent rapport a été établi pour toutes les revendications

| Lieu de la recherche | Date d'achèvement de la recherche | Examinateur |
|---|---|---|
| LA HAYE | 28-03-1989 | HUGGINS J.D. |

EPO FORM 1503 03.82 (P0402)